(19) **Europäisches Patentamt / European Patent Office / Office européen des brevets**

(11) **EP 3 427 818 B1**

(12) **EUROPEAN PATENT SPECIFICATION**

(45) Date of publication and mention
of the grant of the patent:
**04.01.2023 Bulletin 2023/01**

(21) Application number: **17763344.3**

(22) Date of filing: **08.03.2017**

(51) International Patent Classification (IPC):
**B01D 69/02** (2006.01)     **B01D 69/08** (2006.01)
**C02F 1/44** (2006.01)       **C08J 9/26** (2006.01)
**B01D 71/32** (2006.01)

(52) Cooperative Patent Classification (CPC):
**B01D 71/34; B01D 67/0018; B01D 69/02;
B01D 69/08; B01D 69/087; B01D 71/32;
C02F 1/44; C08J 9/26;** B01D 2325/02;
B01D 2325/04; B01D 2325/24; B01D 2325/30;
B01D 2325/40

(86) International application number:
**PCT/JP2017/009338**

(87) International publication number:
**WO 2017/155004 (14.09.2017 Gazette 2017/37)**

(54) **POROUS HOLLOW FIBER MEMBRANE, PRODUCTION METHOD THEREFOR, AND FILTRATION METHOD**

PORÖSE HOHLFASERMEMBRAN, HERSTELLUNGSVERFAHREN DAFÜR UND FILTRATIONSVERFAHREN

MEMBRANE POREUSE À FIBRES CREUSES, SON PROCÉDÉ DE PRODUCTION, ET PROCÉDÉ DE FILTRATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.03.2016 JP 2016045493**

(43) Date of publication of application:
**16.01.2019 Bulletin 2019/03**

(73) Proprietor: **Asahi Kasei Kabushiki Kaisha Tokyo 100-0006 (JP)**

(72) Inventor: **OKAMURA, Daisuke Tokyo 101-8101 (JP)**

(74) Representative: **Strehl Schübel-Hopf & Partner Maximilianstrasse 54 80538 München (DE)**

(56) References cited:
**WO-A1-2014/191296     WO-A1-2014/191296**

CN-B- 102 764 597     JP-A- 2012 040 464
JP-A- 2012 040 464     JP-A- 2012 236 178
JP-A- 2012 511 413     JP-A- 2013 173 139
JP-A- 2013 173 139     US-A1- 2005 098 494
US-A1- 2007 172 640

- **Xianfeng Li ET AL: "Morphology of polyvinylidene fluoride and its blend in thermally induced phase separation process", Journal of Applied Polymer Science, vol. 101, no. 5, 1 January 2006 (2006-01-01), pages 2944-2952, XP055676799, US ISSN: 0021-8995, DOI: 10.1002/app.23489**
- **CUI A ET AL: "Effect of micro-sized SiO"2-particle on the performance of PVDF blend membranes via TIPS", JOURNAL OF MEMBRANE SCIENCE, ELSEVIER BV, NL, vol. 360, no. 1-2, 15 September 2010 (2010-09-15), pages 259-264, XP027118392, ISSN: 0376-7388 [retrieved on 2010-05-13]**

**Description**

Technical Field

The present invention relates to a method for producing the porous hollow fiber membrane, and a filtration method using the porous hollow fiber membrane obtained by the method.

Background Art

Membrane filtration techniques using hollow fiber membranes to clarify liquid to be treated are being widely used in water treatment, sewage treatment, and the like. A thermally induced phase separation process is known as a method for producing hollow fiber membranes for use in the membrane filtration.

In the thermally induced phase separation process, a thermoplastic resin and an organic liquid are used. In the thermally induced phase separation process using, as the organic liquid, a solvent that does not dissolve the thermoplastic resin at room temperature and dissolves the thermoplastic resin at high temperatures, i.e., a potential solvent (poor solvent), the thermoplastic resin and the organic liquid are kneaded at a high temperature to dissolve the thermoplastic resin in the organic liquid, and then the kneaded product is cooled to room temperature to induce phase separation, and further the organic liquid is removed therefrom to produce a porous body. This process is advantageous in the following points:

(a) allowing membrane formation using a polymer, such as polyethylene, for which no appropriate solvent for dissolving the polymer at room temperature exists; and
(b) facilitating to obtain a highly strong membrane if the thermoplastic resin used is a crystalline resin, since the membrane is formed by dissolving the resin at a high temperature, and then cooling and solidifying the resin, which promotes crystallization of the resin.

Because of these advantages, the thermally induced phase separation process is frequently used in methods for producing porous membranes. With a certain type of crystalline resins, however, the membrane tends to have a spherocrystal structure, which has high strength but has low elongation and is brittle, and thus presents a durability problem in practical use.

As prior art, a technique for forming a membrane using a poor solvent for a thermoplastic resin that is selected from citric acid esters is disclosed (see Patent Literature 1).

Citation List

Patent Literature

[PTL 1] Japanese Unexamined Patent Publication No. 2011-168741
WO 2014191296 A1 discloses a microporous polyvinylidene fluoride membrane produced by thermally induced phase separation using a solvent selected from glyceryl triacetate, glyceryl diacetate, 2-(2-butoxyethoxy-)ethyl acetate, dibutyl phthalate, adipic acid diethyl ester, adipic acid dibutyl ether, butyl diglycol acetate, butyl glycol acetate, glycol diacetate, propylene carbonate, butyrolactone, or c-caprolactam, and a non-solvent selected from dioctyl adipate, glyceryl monoacetate, glycerol, glycol, diglycol, or castor oil.
US 2005098494 A1 discloses poly(ethylenechlorotrifluoroethylene)-based porous hollow fiber membranes produced by thermally induced phase separation.
CN 102764597 B discloses the production of planar polyvinylidene fluoride ultrafiltration membranes using thermally induced phase separation using a solvent and a non-solvent.
JP 2012040464 A, JP 2013173139 A, and Aihua Cui et al., Journal of Membrane Science 360 (2010), 259-264, disclose the production of porous hollow fiber membranes by thermally induced phase separation, wherein silicon dioxide is used as an inorganic component. Xianfeng Li et al., Journal of Applied Polymer Science, Vol. 101, 2944-2952 (2006), disclose the production of porous hollow fiber membranes by thermally induced phase separation, wherein calcium carbonate is used as an inorganic component.

Summary of Invention

Technical Problem

However, the membrane produced according to the method disclosed in Patent Literature 1 also has a spherocrystal structure.

In view of the above-described circumstances, the present invention is directed to providing a porous hollow fiber membrane having a three-dimensional network structure and having excellent chemical resistance and mechanical strength, a method for producing the porous hollow fiber membrane, and a filtration method using the porous hollow fiber membrane.

Solution to Problem

Known techniques for producing porous hollow fiber membranes use a poor solvent in a membrane forming liquid including the thermoplastic resin to perform thermally induced phase separation.

The present inventors have found that using membrane forming liquids containing a thermoplastic resin, a non-solvent, and a poor solvent enables producing a membrane having a membrane structure exhibiting a three-dimensional network structure, good pore formability, and high chemical resistance and mechanical strength. Further, the present inventors have found that performing filtration using the membrane produced as described above enables membrane filtration in a highly efficient manner.

The present invention is as set out in the appended claims.

Advantageous Effects of Invention

According to the present invention, a method for producing a porous hollow fiber membrane having a membrane structure forming a three-dimensional network structure, good pore formability, and high chemical resistance and mechanical strength is provided.

Brief Description of the Drawings

[FIG. 1] FIG. 1 is a schematic view showing the outer surface of a porous hollow fiber membrane of one embodiment of the invention, and

[FIG. 2] FIG. 2 is a schematic view showing the outer surface of a porous hollow fiber membrane of a comparative example.

Description of Embodiments

Now, embodiments of the present invention will be described in detail.

*Porous Hollow Fiber Membrane*

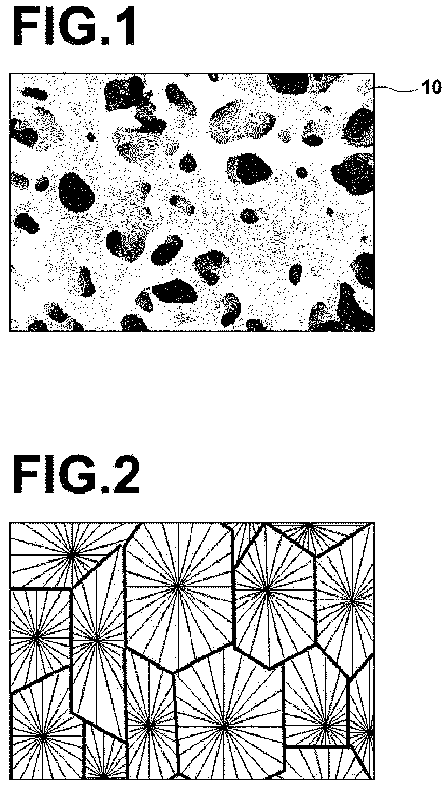

FIG. 1 schematically shows the outer surface of a porous hollow fiber membrane obtained according to the method of the present invention according to one embodiment. The outer surface of a porous hollow fiber membrane 10 shown in FIG. 1 has a three-dimensional network structure, rather than a spherocrystal structure. The three-dimensional network structure of the porous hollow fiber membrane provides higher tensile elongation at break, and higher resistance to alkali (such as an aqueous sodium hydroxide solution), often used as a clearing agent for such membranes.

The porous hollow fiber membrane 10 obtained according to the method of the present invention includes a thermoplastic resin selected from polyvinylidene fluoride, ethylene-tetrafluoroethylene copolymer, and ethylene-chlorotrifluoroethylene copolymer.

It should be noted that the porous hollow fiber membrane 10 may contain components other than the thermoplastic resin (such as impurities) in an amount up to about 5 mass%. The porous hollow fiber membrane contains a solvent that is used during production thereof. The porous hollow fiber membrane 10 contains a non-solvent and a poor solvent, which are used as solvents during production, as described later. These solvents can be detected by pyrolysis GC-MS (gas chromatography mass spectrometry).

Namely, the porous hollow fiber membrane is a porous hollow fiber membrane including the thermoplastic resin, the porous hollow fiber membrane including at least the non-solvent and the poor solvent, wherein:

the non-solvent is at least one selected from sebacic acid esters, citric acid esters, acetyl citric acid esters, adipic acid esters, trimellitic acid esters, oleic acid esters, palmitic acid esters, stearic acid esters, phosphoric acid esters, C6-C30 fatty acids, and epoxidized vegetable oils,

the poor solvent is different from the non-solvent, and is at least one selected from sebacic acid esters, citric acid esters, acetyl citric acid esters, adipic acid esters, trimellitic acid esters, oleic acid esters, palmitic acid esters, stearic acid esters, phosphoric acid esters, C6-C30 fatty acids, and epoxidized vegetable oils, and the porous hollow fiber membrane has a three-dimensional network structure.

Examples of the C6-C30 fatty acids may include capric acid, lauric acid, oleic acid.

Examples of the epoxidized vegetable oils may include epoxidized soybean oil, epoxidized linseed oil.

The non-solvent does not uniformly dissolve the thermoplastic resin in a mixture of the thermoplastic resin and the non-solvent at a weight ratio of 20:80 even when the temperature of the first mixture is raised to the boiling point of the non-solvent.

The poor solvent does not uniformly dissolve the thermoplastic resin in the poor solvent in a mixture of the thermoplastic resin and the poor solvent at a weight ratio of 20:80 when the temperature of the mixture is 25°C, and uniformly dissolves the thermoplastic resin in the poor solvent in the mixture when the mixture is at a certain temperature that is higher than 100°C and not higher than the boiling point of the poor solvent.

*Physical Properties of the Porous Hollow Fiber Membrane*

The porous hollow fiber membrane 10 obtained by the method of the present invention has an initial value of tensile elongation at break of preferably 60% or more, more preferably 80% or more, still more preferably 100% or more, and particularly preferably 120% or more. The tensile elongation at break can be measured using the measurement method described later in the Examples section.

Alkali resistance can be measured using values of the elongation at break before and after alkali immersion. The porous hollow fiber membrane 10 preferably retains, after immersion in a 4% aqueous NaOH solution for ten days, a tensile elongation at break of 60% or more of the initial value of the tensile elongation at break, more preferably 65% or more, and still more preferably 70% or more.

From a practical point of view, the porous hollow fiber membrane 10 has a compression strength of 0.2 MPa or more, preferably 0.3 to 1.0 MPa, and more preferably 0.4 to 1.0 MPa.

The surface of the porous hollow fiber membrane 10 has an open area ratio (surface open area ratio) of 20 to 60%, preferably 25 to 50%, and more preferably 25 to 45%. Performing filtration using the membrane that has a surface open area ratio of 20% or more on the side brought into contact with the liquid to be treated allows reducing both degradation of water permeability due to clogging and degradation of water permeability due to chafing of the membrane surface, thereby increasing stability of filtration. However, providing an excessively large pore diameter to provide a high open area ratio may hinder achieving desired separation performance. For this reason, the pore diameter at the outer surface of the membrane is 1,000 nm or less, preferably 10 to 800 nm, and more preferably 100 to 700 nm. The pore diameter being 1,000 nm or less allows blocking components to be blocked contained in the liquid to be treated, and the pore diameter being 10 nm or more allows ensuring sufficiently high water permeability.

The porous hollow fiber membrane 10 has a thickness of preferably 80 to 1,000 $\mu$m, and more preferably 100 to 300 $\mu$m. The thickness being 80 $\mu$m or more allows providing high strength, and the thickness being 1,000 $\mu$m or less allows reducing pressure loss due to membrane resistance.

The porous hollow fiber membrane 10 has a porosity of preferably 50 to 80%, and more preferably 55 to 65%. The porosity being 50% or more allows providing high water permeability, and the porosity being 80% or less allows providing high mechanical strength.

The porous hollow fiber membrane 10 may be in the form of, for example, an annular single-layer membrane. However, the porous hollow fiber membrane 10 may be in the form of a multilayer membrane including a separation layer and a support layer supporting the separation layer, which have different pore diameters from each other. The outer surface and the inner surface of the porous hollow fiber membrane 10 may have a modified cross-section structure, such as a cross-section structure including protrusions.

*Liquid to be Treated*

Liquids to be treated with the porous hollow fiber membrane 10 includes turbid water and process liquids. The porous hollow fiber membrane 10 is suitably used in water purification methods that include filtering turbid water.

The turbid water refers to natural water, domestic drainage, and treated water of them. Examples of the natural water include river water, lake water, groundwater, and sea water. The turbid water to be treated also includes treated water of natural water subjected to a treatment, such as sedimentation, sand filtration, coagulating-sedimentation sand filtration, ozone treatment, and activated carbon treatment. An example of the domestic drainage is sewage water. Examples of the turbid water to be treated also include primary treated water of sewage water subjected to screen filtration or sedimentation, secondary treated water of sewage water subjected to biotreatment, and even tertiary treated (highly treated) water of sewage water subjected to a treatment, such as coagulating-sedimentation sand filtration, activated carbon treatment, and ozone treatment. Such turbid water contains minute suspensoids on the order of μm or less including organic substances, inorganic substances, and organic-inorganic mixtures (such as humic colloid, organic colloid, clay, and bacteria).

Water quality of the turbid water (the above-described natural water, domestic drainage, and treated water of them) can generally be expressed using one of or combination of turbidity and concentration of organic substances, which are representative water quality indexes. According to the turbidity (average turbidity rather than instant turbidity), the water quality can be roughly classified, for example, into low-turbidity water with a turbidity of less than 1, medium-turbidity water with a turbidity of 1 or more and less than 10, high-turbidity water with a turbidity of 10 or more and less than 50, and ultrahigh-turbidity water with a turbidity of 50 or more. According to the concentration of organic substances (Total Organic Carbon (TOC)): mg/L) (average value rather than instant value), the water quality can be roughly classified, for example, into low-TOC water with a TOC of less than 1, medium-TOC water with a TOC of 1 or more and less than 4 , high-TOC water with a TOC of 4 or more and less than 8, and ultrahigh-TOC water with a TOC of 8 or more. Basically, water with higher turbidity or TOC is more likely to cause clogging of the filtration membrane, and therefore the effect of using the porous hollow fiber membrane 10 is higher for water with higher turbidity or TOC.

The process liquid refers to a liquid to be separated in a process separating a valuable material and invaluable materials during production of food, drug, semiconductor, etc. In food production, the porous hollow fiber membrane 10 is used to separate a liquor, such as, sake or wine, from a yeast. In drug production, the porous hollow fiber membrane 10 is used, for example, for sterile filtration during purification of protein. In semiconductor production, the porous hollow fiber membrane 10 is used, for example, to separate an abrasive from water in polishing wastewater.

*Method for Producing Porous Hollow Fiber Membrane 10*

Next, the method for producing the porous hollow fiber membrane 10 is described. The method for producing a porous hollow fiber membrane includes (a) preparing a melt-kneaded product comprising the thermoplastic resin, the non-solvent, the poor solvent and the inorganic fine powder having a primary particle size of 5 nm or more and 30 nm or less, (b) supplying the melt-kneaded product to a multiple-structure spinning nozzle and extruding the melt-kneaded product through the spinning nozzle to obtain a hollow fiber membrane, (c) extracting a plasticizer from the hollow fiber membrane and (d) extracting the inorganic fine powder having a primary particle size of 5 nm or more and 30 nm or less from the hollow fiber membrane after the step (c).

The thermoplastic resin in the melt-kneaded product has a concentration of preferably 20 to 60 mass%, more preferably 25 to 45 mass%, and even more preferably 30 to 45 mass%. The concentration being 20 mass% or more allows providing high mechanical strength, and the concentration being 60 mass% or less allows providing high water permeability.

The melt-kneaded product may consist of the thermoplastic resin, the inorganic fine powder, the non-solvent and the poor solvent.

As an extracting agent used in the step (c), a liquid, such as methylene chloride or various alcohols, that does not dissolve the thermoplastic resin and has high affinity with the plasticizer is preferred.

The porous hollow fiber membrane 10 is produced using a melt-kneaded product containing the inorganic fine powder as an additive, and the production method includes, after the step (c), (d) extracting the additive from the hollow fiber membrane to obtain the porous hollow fiber membrane 10. As an extracting agent used in the step (d), a liquid, such as hot water, or an acid or alkali that is capable of dissolving the additive used and does not dissolve the thermoplastic resin is preferably used.

The inorganic fine powder contained in the melt-kneaded product has a primary particle size of 5 nm or more and less than 30 nm. Specific examples of the inorganic fine powder include silica (including fine powder silica), titanium oxide, lithium chloride, calcium chloride, organic clay. Among them, fine powder silica is preferred in view of cost. The "primary particle size" of the inorganic fine powder refers to a value that is found through analysis of an electron micrograph. Namely, first, a batch of inorganic fine powder is pre-treated according to the method prescribed in ASTM D3849. Thereafter, diameters of 3000 to 5000 particles imaged in a transmission electron micrograph are measured, and an arithmetic average of these values is calculated as the primary particle size of the inorganic fine powder.

The material of the inorganic fine powder present in the porous hollow fiber membrane can be determined by identifying elements present therein by fluorescent X-ray analysis.

If an organic substances is used as an additive, using a hydrophilic polymer, such as polyvinyl pyrrolidone or polyethylene glycol, allows imparting hydrophilicity to the hollow fiber membrane. Using an additive with high viscosity, such as glycerin, ethylene glycol, allows controlling the viscosity of the melt-kneaded product.

Next, the step of (a) preparing the melt-kneaded product of the method for producing a porous hollow fiber membrane of the invention is described in detail.

In the method for producing a porous hollow fiber membrane of the invention, a non-solvent for the thermoplastic resin is mixed with a poor solvent. Using a non-solvent in the raw materials of the membrane allows obtaining a porous hollow fiber membrane having a three-dimensional network structure. Although the mechanism is not perfectly clear, it is believed that use of a poor solvent mixed with a non-solvent to reduce the solubility moderately hinders crystallization of the polymer, and this promotes formation of a three-dimensional network structure. The non-solvent and the poor solvent are selected from sebacic acid esters, citric acid esters, acetyl citric acid esters, adipic acid esters, trimellitic acid esters, oleic acid esters, palmitic acid esters, stearic acid esters, phosphoric acid esters, C6-C30 fatty acids, and epoxidized vegetable oils.

Specific examples of the esters and the boiling point thereof are as follows. Acetyl tributyl citrate has a boiling point of 343°C, dibutyl sebacate has a boiling point of 345°C, dibutyl adipate has a boiling point of 305°C, di-isobutyl adipate has a boiling point of 293°C, bis(2-ethylhexyl) adipate has a boiling point of 335°C, diisononyl adipate has a boiling point of 250°C or more, diethyl adipate has a boiling point of 251°C, triethyl citrate has a boiling point of 294°C, and triphenyl phosphite has a boiling point of 360°C.

A solvent that is capable of dissolving the thermoplastic resin at ordinary temperatures is referred to as a good solvent, a solvent that is not capable of dissolving the thermoplastic resin at ordinary temperatures but is capable of dissolving the thermoplastic resin at high temperatures is referred to as a poor solvent for the thermoplastic resin, and a solvent that is not capable of dissolving the thermoplastic resin even at high temperatures is referred to as a non-solvent. In the invention, the poor solvent and the non-solvent are determined as follows.

The poor solvent is at least one selected from sebacic acid esters, citric acid esters, acetyl citric acid esters, adipic acid esters, trimellitic acid esters, oleic acid esters, palmitic acid esters, stearic acid esters, phosphoric acid esters, C6-C30 fatty acids, and epoxidized vegetable oils, and is one that does not uniformly dissolve the thermoplastic resin in the solvent in a mixture of the thermoplastic resin and the poor solvent at a weight ratio of 20:80 when the temperature of the mixture is 25°C, and uniformly dissolves the thermoplastic resin in the poor solvent in the mixture when the mixture is at a certain temperature that is higher than 100°C and not higher than the boiling point of the poor solvent.

The non-solvent is at least one selected from sebacic acid esters, citric acid esters, acetyl citric acid esters, adipic acid esters, trimellitic acid esters, oleic acid esters, palmitic acid esters, stearic acid esters, phosphoric acid esters, C6-C30 fatty acids, and epoxidized vegetable oils, and is one that does not uniformly dissolve the thermoplastic resin in the non-solvent in a mixture of the thermoplastic resin and the non-solvent at a weight ratio of 20:80 even when the temperature of the mixture is raised to the boiling point of the non-solvent.

Specifically, whether a solvent is a good solvent, a poor solvent, or a non-solvent is determined based on solubility at temperatures in the above-described ranges, which is determined by putting the thermoplastic resin in an amount of 2g and the solvent in an amount of 8g in a test tube and heating them using a test tube block heater to the boiling point of the solvent with intervals of about 10°C, and mixing them using a spatula. Namely, a solvent that dissolves the thermoplastic resin is a good solvent or poor solvent, and a solvent that does not dissolve the thermoplastic resin is a non-solvent.

For example, in the case where polyvinylidene fluoride (PVDF) is used as the thermoplastic resin, and acetyl tributyl citrate, dibutyl sebacate, or dibutyl adipate is used as the solvent, PVDF is not uniformly dissolved in the solvent at 25°C, and PVDF is uniformly mixed and dissolved in the solvent when the mixture is at a certain temperature that is raised to a temperature higher than 100°C and not higher than the boiling point. On the other hand, in the case where bis(2-ethylhexyl) adipate, diisononyl adipate, bis(2-ethylhexyl) sebacate, or an oleic acid is used as the solvent, PVDF is not dissolved in the solvent even when the temperature is raised to the boiling point.

Further, in the case where ethylene-tetrafluoroethylene copolymer (ETFE) is used as the thermoplastic resin, and diethyl adipate is used as the solvent, ETFE is not uniformly dissolved in the solvent at 25°C, and ETFE is uniformly mixed and dissolved in the solvent when the mixture is at a certain temperature that is raised to a temperature higher than 100°C and not higher than the boiling point. On the other hand, in the case where bis(2-ethylhexyl) adipate, diisononyl adipate, or a capric acid is used as the solvent, ETFE is not dissolved in the solvent.

Further, in the case where ethylene-monochlorotrifluoroethylene copolymer (ECTFE) is used as the thermoplastic resin, and triethyl citrate, or bis(2-ethylhexyl) adipate is used as the solvent, ECTFE is not uniformly dissolved in the solvent at 25°C, and ECTFE is uniformly dissolved in the solvent when the mixture is at a certain temperature that is raised to a temperature higher than 100°C and not higher than the boiling point. On the other hand, in the case where triphenyl phosphite or an oleic acid is used as the solvent, ECTFE is not dissolved in the solvent.

In the case where polyethylene (PE) is used as the thermoplastic resin, and dibutyl sebacate is used as the solvent, PE is not uniformly dissolved in the solvent at 25°C, and PE is uniformly mixed and dissolved in the solvent when the mixture is at a certain temperature that is raised to a temperature higher than 100°C and not higher than the boiling point. On the other hand, in the case where bis(2-ethylhexyl) adipate or acetyl tributyl citrate is used as the solvent, PE is not dissolved in the solvent.

*Filtration Method*

The filtration method of the invention includes performing filtration of the liquid to be treated using the porous hollow fiber membrane of the invention. Using the porous hollow fiber membrane of the invention enables performing the filtration in a highly efficient manner.

Examples

Now, the present invention is described in detail with reference to examples, which are not intended to limit the invention. Values of physical properties of examples and comparative example were found according to the following methods.

*(1) Outer Diameter and Inner Diameter ofMembrane*

Each hollow fiber membrane was cut into thin slices with a razor, and the outer diameter and the inner diameter thereof were measured using a 100x magnifying glass. For each sample, measurement was performed at 60 points at 30-mm intervals. At this time, the standard deviation and the average value were calculated, and then a value of (Standard deviation)/(Average value) was calculated as the variation coefficient.

*(2) Observation of Porosity, Pore Diameter, and Membrane Structure*

Using an electron microscope, SU8000 series, available from HITACHI, 5000x electron microscope (SEM) images of the surface and a cross section of each hollow fiber membrane were taken with an accelerating voltage of 3kV. The electron microscope sample of the cross section was obtained by slicing a membrane sample that was frozen in ethanol. Then, using an image analysis software, Winroof6.1.3, "noise removal" of the SEM images was performed at a value "6", and then, binarizaion with a single threshold value, "threshold value : 105", was performed. The open area ratio at the membrane surface was found by finding areas occupied by pores on the thus obtained binarized images.

The pore diameter was determined by adding pore areas of individual pores present on the surface in the ascending order of pore diameter, and determining the pore diameter of the pore whose pore area was added just before 50% of the total pore area was reached.

The membrane structure was determined by observing the membrane surface and the cross section captured in the 5000x images, where a membrane that had no spherocrystals and had polymer trunks exhibiting a three-dimensional network structure was determined as having a three-dimensional network structure.

*(3) Water Permeability*

Each hollow fiber membrane having a length of about 10 cm was immersed in ethanol, and then immersed in pure water several times. Thereafter, one end of the wet hollow fiber membrane was sealed, and a syringe needle was inserted into the hollow portion of the membrane through the other end to inject pure water at 25°C into the hollow portion from the syringe needle at a pressure of 0.1 MPa under an environment of 25°C. Then, the amount of pure water permeated to the outer surface was measured, and pure water flux was determined according to the equation below to evaluate the water permeability.

$$\text{Pure water flux } [L/m^2/h] = 60 \times (\text{Amount of permeated water } [L]) / \{\pi \times (\text{Outer diameter of membrane } [m]) \times (\text{Effective membrane length } [m]) \times (\text{Measurement time } [min])\}$$

It should be noted that the effective membrane length here refers to a net length of the membrane excluding the length of the portion in which the syringe needle is inserted.

*(4) Tensile Elongation at Break* (%)

Load and displacement at tensile break were measured using each hollow fiber membrane as a sample according to the method prescribed in JIS K7161 under the following conditions.

- Measuring instrument: Instron-type tensile tester (AGS-5D, available from Shimadzu Corporation)
- Distance between chucks: 5 cm
- Tensile speed: 20 cm/minute

The tensile elongation at break was calculated from the obtained results according to JIS K7161.

*(5) Water Permeability Retention During Filtration of Turbid Water*

This is an index used to determine the degree of degradation of water permeability due to clogging (fouling). Each wet hollow fiber membrane, after immersed in ethanol, and then immersed in pure water several times, with an effective membrane length of 11 cm was used to perform filtration according to the external pressure method. First, pure water was filtered under such a filtration pressure that the pure water permeated at a rate of 10 m$^3$ per day per 1 m$^2$ of the outer surface area of the membrane, and the permeated water was collected for 2 minutes. The resulting value was used as an initial pure water permeability. Subsequently, surface stream water of a river (Fujikawa River surface stream water with a turbidity of 2.2 and a TOC concentration of 0.8ppm), which is natural turbid water, was filtered for 10 minutes under the same filtration pressure as that in the measurement of the initial pure water permeability, and the permeated water was collected for the last 2 minutes of the filtration. The resulting value was used as a turbid water filtration permeability. The water permeability retention during filtration of turbid water is defined as the equation below. All the operations were performed at 25°C, and a linear velocity at membrane surface of 0.5 m/second.

$$\text{Water permeability retention during filtration of turbid water [\%]} =$$

$$100 \times (\text{Turbid water filtration permeability [g]}) / (\text{Initial pure water permeability [g]})$$

The individual parameters in the above equation are calculated as follows.

$$\text{Filtration pressure} = \{(\text{Input pressure}) + (\text{Output pressure})\}/2$$

$$\text{Outer surface area of membrane [m}^2\text{]} = \pi \times (\text{Outer diameter of fiber [m]}) \times (\text{Effective membrane length [m]})$$

$$\text{Linear velocity at membrane surface [m/s]} = 4 \times (\text{Amount of circulated water [m}^3\text{/s]}) /$$

$$\{\pi \times (\text{Tube diameter [m]})^2 - \pi \times (\text{Outer diameter of membrane [m]})^2\}$$

During this measurement, the filtration pressure for the turbid water was set such that the filtration pressure was not uniform across the membranes, and that the initial pure water permeability (which is the same as the water permeability at the start of filtration of turbid water) was at a rate of 10 m$^3$ per day per 1 m$^2$ of the outer surface area of the membrane. This is because that, in an actual water treatment or sewage water treatment, membranes are usually used in a constant rate filtration operation (where the filtration pressure is adjusted such that a fixed amount of filtered water is obtained within a fixed amount of time), and it was contemplated to allow, in this measurement using a single hollow fiber membrane, comparison of the water permeability degradation under conditions as near as possible to the conditions of the constant rate filtration operation.

*(6) Chemical Resistance Test*

Each wetted porous hollow fiber membrane was cut to a length of 10 cm, and 20 pieces of them were immersed in 500 ml of a 4% aqueous sodium hydroxide solution for ten days and kept at 40°C. Tensile elongation at break of the membrane before and after the immersion in sodium hydroxide was measured for the 20 samples, and the average value was calculated. An elongation retention, which is defined as 100×(Elongation after immersion) / (Elongation before immersion), was used to evaluate chemical resistance.

*Example 1*

A melt-kneaded product was extruded using a spinning nozzle having a double tube structure to obtain a porous hollow fiber membrane of Example 1.
The melt-kneaded product was prepared using 40 mass% of PVDF resin (KF-W#1000, available from Kureha Corporation) as the thermoplastic resin, 23 mass% of fine powder silica (primary particle size: 16nm), and 32.9 mass% of bis(2-ethylhexyl) adipate (DOA, boiling point 335°C) and 4.1 mass% of acetyl tributyl citrate (ATBC, boiling point 343°C) as the solvent. The temperature of the melt-kneaded product was about 200°C to 250°C.

The hollow fiber extrudate passed through a free running distance of 120 mm was then solidified in water at 30°C to produce a porous hollow fiber membrane by the thermally induced phase separation process. The hollow fiber extrudate was taken up on a reel at a speed of 5 m/minute. The thus obtained double layer hollow fiber extrudate was immersed in isopropyl alcohol to extract and remove the bis(2-ethylhexyl) adipate and the acetyl tributyl citrate. Subsequently, the hollow fiber membrane was immersed in water for 30 minutes for water substitution. Then, the hollow fiber membrane was immersed in a 20 mass% aqueous NaOH solution at 70°C for one hour, and repeatedly washed with water to extract and remove the fine powder silica.

The formulation, production conditions, and various performances of the obtained porous hollow fiber membrane of Example 1 are shown in Table 1. The membrane structure of this porous hollow fiber membrane exhibited a three-dimensional network structure, such as one shown in FIG. 1.

*Example 2*

A porous hollow fiber membrane was produced in the same manner as in Example 1, except that the melt-kneaded product was prepared using 4.1 mass% of dibutyl sebacate (DBS, boiling point 345°C) as the solvent in place of 4.1 mass% of acetyl tributyl citrate (ATBC, boiling point 343°C).

The formulation, production conditions, and various performances of the obtained porous hollow fiber membrane of Example 2 are shown in Table 1. The membrane structure of this porous hollow fiber membrane exhibited a three-dimensional network structure, such as one shown in FIG. 1.

*Example 3*

A porous hollow fiber membrane was produced in the same manner as in Example 1, except that the melt-kneaded product was prepared using 32.9 mass% of diisononyl adipate (DINA, boiling point 250°C or more) as the solvent in place of 32.9 mass% of bis(2-ethylhexyl) adipate (DOA, boiling point 335°C).

The formulation, production conditions, and various performances of the obtained porous hollow fiber membrane of Example 3 are shown in Table 1. The membrane structure of this porous hollow fiber membrane exhibited a three-dimensional network structure, such as one shown in FIG. 1.

*Example 4*

A porous hollow fiber membrane was produced in the same manner as in Example 1, except that the melt-kneaded product was prepared using 40 mass% of ETFE resin (TL-081, available from Asahi Glass Co., Ltd.) as the thermoplastic resin, 23 mass% of fine powder silica (primary particle size: 16nm), and 32.9 mass% of bis(2-ethylhexyl) adipate (DOA, boiling point 335°C) and 4.1 mass% of di-isobutyl adipate (DIBA, boiling point 293°C) as the solvent.

The formulation, production conditions, and various performances of the obtained porous hollow fiber membrane of Example 4 are shown in Table 1. The membrane structure of this porous hollow fiber membrane exhibited a three-dimensional network structure, such as one shown in FIG. 1.

*Example 5*

A porous hollow fiber membrane was produced in the same manner as in Example 1, except that the melt-kneaded product was prepared using 40 mass% of ECTFE resin (HALAR901, available from Solvay Specialty Polymers) as the thermoplastic resin, 23 mass% of fine powder silica (primary particle size: 16nm), and 32.9 mass% of triphenyl phosphite (TPP, boiling point 360°C) and 4.1 mass% of bis(2-ethylhexyl) adipate (DOA, boiling point 335°C) as the solvent.

The formulation, production conditions, and various performances of the obtained porous hollow fiber membrane of Example 5 are shown in Table 1. The membrane structure of this porous hollow fiber membrane exhibited a three-dimensional network structure, such as one shown in FIG. 1.

*Example 6 (reference example)*

A porous hollow fiber membrane was produced in the same manner as in Example 1, except that the melt-kneaded product was prepared using 40 mass% of ETFE resin (TL-081, available from Asahi Glass Co., Ltd.) as the thermoplastic resin, and 30 mass% of bis(2-ethylhexyl) adipate (DOA, boiling point 335°C) and 30 mass% of di-isobutyl adipate (DIBA, boiling point 293°C) as the solvent, and without using the fine powder silica.

The hollow fiber extrudate passed through a free running distance of 120 mm was then solidified in water at 30°C to produce a porous hollow fiber membrane by the thermally induced phase separation process. The hollow fiber extrudate was taken up on a reel at a speed of 5 m/minute. The thus obtained double layer hollow fiber extrudate was immersed in isopropyl alcohol to extract and remove the solvent.

The formulation, production conditions, and various performances of the obtained porous hollow fiber membrane of Example 6 are shown in Table 1. The membrane structure of this porous hollow fiber membrane exhibited a three-dimensional network structure, such as one shown in FIG. 1.

*Comparative Example 1*

A hollow fiber membrane of Comparative Example 1 was obtained in the same manner as in Example 1 except that only ATBC was used as the solvent. The formulation, production conditions, and various performances of the obtained porous hollow fiber membrane of Comparative Example 1 are shown in Table 1. The membrane structure of this porous hollow fiber membrane exhibited a spherocrystal structure, such as one shown in FIG. 2.

*Comparative Example 2*

A porous hollow fiber membrane of Comparative Example 2 was obtained in the same manner as in Example 6, except that only DIBA was used as the solvent, and the fine powder silica was not used. The formulation, production conditions, and various performances of the obtained porous hollow fiber membrane of Comparative Example 2 are shown in Table 1. The membrane structure of this porous hollow fiber membrane exhibited a spherocrystal structure, such as one shown in FIG. 2.

*Comparative Example 3*

A hollow fiber membrane of Comparative Example 3 was obtained in the same manner as in Example 5, except that only DOA was used as the solvent. The formulation, production conditions, and various performances of the obtained porous hollow fiber membrane of Comparative Example 3 are shown in Table 1. The membrane structure of this porous hollow fiber membrane exhibited a spherocrystal structure, such as one shown in FIG. 2.

Table 1

| | Example 1 | Example 2 | Example 3 | Example 4 | Example 5 | Example 6* |
|---|---|---|---|---|---|---|
| Resin | PVDF KF W#1000 40 mass% | PVDF KF W#1000 40 mass% | PVDF KF W#1000 40 mass% | ETFE TL-081 40 mass% | ECTFE Halar901 40 mass% | ETFE TL-081 40 mass% |
| Additive | fine powder silica 23 mass% | fine powder silica 23 mass% | fine powder silica 23 mass% | fine powder silica 23 mass% | fine powder silica 23 mass% | none |
| Non-solvent | DOA 32.9 mass% | DOA 32.9 mass% | DINA 32.9 mass% | DOA 32.9 mass% | TPP 32.9 mass% | DOA 30 mass% |
| Poor solvent | ATBC 4.1 mass% | DBS 4.1 mass% | ATBC 4.1 mass% | DIBA 4.1 mass% | DOA 4.1 mass% | DIBA 30 mass% |
| Membrane forming liquid ejection temperature [°C] | 240 | 240 | 240 | 250 | 240 | 250 |
| Solidification liquid | water | water | water | water | water | water |
| Solidification liquid temperature [°C] | 30 | 30 | 30 | 30 | 30 | 30 |
| Free running distance [mm] | 120 | 120 | 120 | 120 | 120 | 120 |

(continued)

| | Example 1 | Example 2 | Example 3 | Example 4 | Example 5 | Example 6* |
|---|---|---|---|---|---|---|
| Pore diameter [nm] | 200 | 200 | 250 | 200 | 200 | 200 |
| Pore structure | three-dimensional network | three-dimensional network | three-dimensional network | three-dimensional network | three-dimensional network | three-dimensional network |
| Surface open area ratio [%] | 30 | 30 | 30 | 25 | 25 | 25 |
| Water permeability [L/(m²·h)] | 2,000 | 1,800 | 3,000 | 2,500 | 2,000 | 2,000 |
| Outer diameter/ inner diameter [mm] | 1.2/0.7 | 1.2/0.7 | 1.2/0.7 | 1.2/0.7 | 1.2/0.7 | 1.2/0.7 |
| Tensile elongation at break [%] | 170 | 160 | 150 | 160 | 120 | 160 |
| Elongation retention after immersion in NaOH [%] | 70 | 70 | 70 | 90 | 90 | 90 |
| Water permeability retention [%] | 75 | 75 | 75 | 70 | 80 | 70 |
| * for reference | | | | | | |

Table 2

Table 2

| | Comparative Example 1 | Comparative Example 2 | Comparative Example 3 |
|---|---|---|---|
| Resin | PVDF KF W#1000 40 mass% | ETFE TL-081 40 mass% | ECTFE HALAR901 40 mass% |
| Additive | fine powder silica 23 mass% | none | fine powder silica 23 mass% |
| Non-solvent | none | none | none |
| Poor solvent | ATBC 37 mass% | DIBA 60 mass% | DOA 37 mass% |
| Membrane forming liquid ejection temperature [°C] | 240 | 250 | 240 |
| Solidification liquid | water | water | water |
| Solidification liquid temperature [°C] | 30 | 30 | 30 |
| Free running distance [mm] | 120 | 120 | 120 |
| Pore diameter [nm] | 200 | 100 | 100 |
| Pore structure | spherocrystal | spherocrystal | spherocrystal |

(continued)

|  | Comparative Example 1 | Comparative Example 2 | Comparative Example 3 |
|---|---|---|---|
| Surface open area ratio [%] | 15 | 15 | 15 |
| Water permeability [L/(m$^2$·h)] | 150 | 200 | 100 |
| Outer diameter/inner diameter [mm] | 1.2/0.7 | 1.2/0.7 | 1.2/0.7 |
| Tensile elongation at break [%] | 30 | 100 | 30 |
| Elongation retention after immersion in NaOH [%] | 30 | 80 | 80 |
| Water permeability retention [%] | 30 | 30 | 30 |

As shown in Tables 1 and 2, Examples 1 to 6 demonstrated that including a non-solvent in the membrane forming liquid in the membrane formation using the thermally induced phase separation allows providing a porous hollow fiber membrane having good pore formability, and high chemical resistance and mechanical strength.

On the other hand, Comparative Examples 1 to 3, which did not include a non-solvent, exhibited a spherocrystal pore structure, and poorer pore formability, chemical resistance, and mechanical strength.

Industrial Applicability

According to the present invention, a porous hollow fiber membrane is formed using a non-solvent and a poor solvent, and this provides a porous hollow fiber membrane having good pore formability, and high chemical resistance and mechanical strength.

**Claims**

1. A method for producing a porous hollow fiber membrane, the method comprising:

    (a) preparing a melt-kneaded product comprising a thermoplastic resin selected from polyvinylidene fluoride, ethylene tetrafluoroethylene copolymer and ethylene chlorotrifluoroethylene copolymer, a non-solvent, a poor solvent and an inorganic fine powder having a primary particle size of 5 nm or more and less than 30 nm,
    (b) supplying the melt-kneaded product to a multiple-structure spinning nozzle and extruding the melt-kneaded product through the spinning nozzle to obtain a hollow fiber membrane,
    (c) extracting the non-solvent and the poor solvent, and
    (d) extracting the inorganic fine powder after the step (c),

    wherein the non-solvent does not uniformly dissolve the thermoplastic resin in a mixture of the thermoplastic resin and the non-solvent at a weight ratio as measured in the description, of 20:80 even when the temperature of the mixture is raised to the boiling point of the non-solvent and is at least one selected from sebacic acid esters, citric acid esters, acetyl citric acid esters, adipic acid esters, trimellitic acid esters, oleic acid esters, palmitic acid esters, stearic acid esters, phosphoric acid esters, C6-C30 fatty acids, and epoxidized vegetable oils, and
    the poor solvent is different from the non-solvent and does not uniformly dissolve the thermoplastic resin in the poor solvent in a mixture of the thermoplastic resin and the poor solvent at a weight ratio of 20:80 when the temperature of the second mixture is 25°C, and uniformly dissolves the thermoplastic resin in the poor solvent in the mixture when the mixture is at a certain temperature that is higher than 100°C and not higher than the boiling point of the poor solvent, and is at least one selected from sebacic acid esters, citric acid esters, acetyl citric acid esters, adipic acid esters, trimellitic acid esters, oleic acid esters, palmitic acid esters, stearic acid esters, phosphoric acid esters, C6-C30 fatty acids, and epoxidized vegetable oils.

2. The method for producing a porous hollow fiber membrane according to claim 1,
    wherein the inorganic material is at least one selected from silica, lithium chloride, and titanium oxide.

3. The method for producing a porous hollow fiber membrane as claimed in claim 1 or 2, wherein the obtained porous hollow fiber membrane has a tensile elongation at break, determined as described in "(4) Tensile Elongation at Break (%)" in the description, of 60% or more.

4. The method for producing a porous hollow fiber membrane as claimed in any one of claims 1 to 3, wherein the porous hollow fiber membrane retains, after immersion in a 4% aqueous NaOH solution for ten days, a tensile elongation at break, determined as described in "(4) Tensile Elongation at Break (%)" in the description, of 60% or more of an initial value of the tensile elongation at break.

5. A filtration method comprising performing filtration using the porous hollow fiber membrane obtained in any one of claims 1 to 4.

**Patentansprüche**

1. Verfahren zur Herstellung einer porösen Hohlfasermembran, wobei das Verfahren umfasst:

(a) Herstellen eines schmelzgekneteten Produkts, das ein thermoplastisches Harz, ausgewählt aus Polyvinylidenfluorid, Ethylen-Tetrafluorethylen-Copolymer und Ethylen-Chlortrifluorethylen-Copolymer, ein Nichtlösungsmittel, ein schlechtes Lösungsmittel und ein anorganisches feines Pulver mit einer Primärteilchengröße von 5 nm oder mehr und weniger als 30 nm umfasst,
(b) Zuführen des schmelzgekneteten Produkts zu einer Mehrfachstruktur-Spinndüse und Extrudieren des schmelzgekneteten Produkts durch die Spinndüse, um eine Hohlfasermembran zu erhalten,
(c) Extrahieren des Nichtlösungsmittels und des schlechten Lösungsmittels und
(d) Extrahieren des feinen anorganischen Pulvers nach dem Schritt (c),

wobei das Nichtlösungsmittel das thermoplastische Harz in einem Gemisch aus dem thermoplastischen Harz und dem Nichtlösungsmittel in einem Gewichtsverhältnis von 20:80, wie in der Beschreibung gemessen, nicht gleichmäßig auflöst, selbst wenn die Temperatur des Gemischs auf den Siedepunkt des Nichtlösungsmittels erhöht wird, und dieses mindestens eines ist, das ausgewählt ist aus Sebacinsäureestern, Zitronensäureestern, Acetylzitronensäureestern, Adipinsäureestern, Trimellitsäureestern, Ölsäureestern, Palmitinsäureestern, Stearinsäureestern, Phosphorsäureestern, C6-C30-Fettsäuren und epoxidierten Pflanzenölen, und
das schlechte Lösungsmittel von dem Nichtlösungsmittel verschieden ist und das thermoplastische Harz in dem schlechten Lösungsmittel in einem Gemisch aus dem thermoplastischen Harz und dem schlechten Lösungsmittel bei einem Gewichtsverhältnis von 20:80 nicht gleichmäßig auflöst, wenn die Temperatur des zweiten Gemischs 25°C beträgt, und das thermoplastische Harz in dem schlechten Lösungsmittel in dem Gemisch gleichmäßig auflöst, wenn das Gemisch eine bestimmte Temperatur von höher als 100°C und nicht höher als dem Siedepunkt des schlechten Lösungsmittels aufweist, und mindestens eines ist, ausgewählt aus Sebacinsäureestern, Zitronensäureestern, Acetylzitronensäureestern, Adipinsäureestern, Trimellitsäureestern, Ölsäureestern, Palmitinsäureestern, Stearinsäureestern, Phosphorsäureestern, C6-C30-Fettsäuren und epoxidierten Pflanzenölen.

2. Verfahren zur Herstellung einer porösen Hohlfasermembran nach Anspruch 1, wobei das anorganische Material mindestens eines ist, das aus Siliciumdioxid, Lithiumchlorid und Titanoxid ausgewählt ist.

3. Verfahren zur Herstellung einer porösen Hohlfasermembran nach Anspruch 1 oder 2, wobei die erhaltene poröse Hohlfasermembran eine Reißdehnung, bestimmt wie unter "(4) Tensile Elongtion at Break (%)" in der Beschreibung beschrieben, von 60 % oder mehr aufweist.

4. Verfahren zur Herstellung einer porösen Hohlfasermembran nach einem der Ansprüche 1 bis 3, wobei die poröse Hohlfasermembran nach Eintauchen in eine 4 %ige wässrige NaOH-Lösung für 10 Tage eine Reißdehnung, bestimmt wie in "(4) Tensile Elongtion at Break (%)" in der Beschreibung beschrieben, von 60 % oder mehr eines Anfangswertes der Reißdehnung beibehält.

5. Filtrationsverfahren, bei dem unter Verwendung der nach einem der Ansprüche 1 bis 4 erhaltenen porösen Hohlfasermembran eine Filtration durchgeführt wird.

**Revendications**

1. Procédé de production d'une membrane poreuse à fibres creuses, le procédé comprenant :

EP 3 427 818 B1

(a) la préparation d'un produit malaxé à l'état fondu comprenant une résine thermoplastique choisie parmi le fluorure de polyvinylidène, un copolymère d'éthylène et de tétrafluoroéthylène et un copolymère d'éthylène et de chlorotrifluoroéthylène, un non-solvant, un solvant médiocre et une fine poudre inorganique ayant une taille de particule primaire de 5 nm ou plus et de moins de 30 nm,

(b) la fourniture du produit malaxé à l'état fondu à une buse rotative à structures multiples et l'extrusion du produit malaxé à l'état fondu à travers la buse rotative pour obtenir une membrane à fibres creuses,

(c) l'extraction du non-solvant et du solvant médiocre, et

(d) l'extraction de la fine poudre inorganique après l'étape (c), dans lequel le non-solvant ne dissout pas uniformément la résine thermoplastique dans un mélange de la résine thermoplastique et du non-solvant à un rapport pondéral, tel que mesuré dans la description, de 20:80 même lorsque la température du mélange est élevée au point d'ébullition du non-solvant et est au moins un choisi parmi les esters d'acide sébacique, les esters d'acide citrique, les esters d'acide acétyl citrique, les esters d'acide adipique, les esters d'acide triméllitique, les esters d'acide oléique, les esters d'acide palmitique, les esters d'acide stéarique, les esters d'acide phosphorique, les acides gras en C6-C30, et les huiles végétales époxydées, et

le solvant médiocre est différent du non-solvant et ne dissout pas uniformément la résine thermoplastique dans le solvant médiocre dans un mélange de la résine thermoplastique et du solvant médiocre à un rapport pondéral de 20:80 lorsque la température du second mélange est de 25 °C, et dissout uniformément la résine thermoplastique dans le solvant médiocre dans le mélange lorsque le mélange est à une certaine température qui est supérieure à 100 °C et non supérieure au point d'ébullition du solvant médiocre, et est au moins un choisi parmi les esters d'acide sébacique, les esters d'acide citrique, les esters d'acide acétyl citrique, les esters d'acide adipique, les esters d'acide triméllitique, les esters d'acide oléique, les esters d'acide palmitique, les esters d'acide stéarique, les esters d'acide phosphorique, les acides gras en C6-C30, et les huiles végétales époxydées.

2. Procédé de production d'une membrane poreuse à fibres creuses selon la revendication 1, dans lequel le matériau inorganique est au moins un choisi parmi la silice, le chlorure de lithium et l'oxyde de titane.

3. Procédé de production d'une membrane poreuse à fibres creuses selon la revendication 1 ou 2, dans lequel la membrane poreuse à fibres creuses obtenue a un allongement à la traction à la rupture, déterminé tel que décrit dans « (4) Allongement à la traction à la rupture (%) » dans la description, de 60 % ou plus.

4. Procédé de production d'une membrane poreuse à fibres creuses selon l'une quelconque des revendications 1 à 3, dans lequel la membrane poreuse à fibres creuses conserve, après immersion dans une solution aqueuse de NaOH à 4 % pendant dix jours, un allongement à la traction à la rupture, déterminé tel que décrit dans « (4) Allongement à la traction à la rupture (%) » dans la description, de 60 % ou plus d'une valeur initiale de l'allongement à la traction à la rupture.

5. Procédé de filtration comprenant la réalisation d'une filtration en utilisant la membrane poreuse à fibres creuses obtenue dans l'une quelconque des revendications 1 à 4.

14

# FIG.1

10

# FIG.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011168741 A
- WO 2014191296 A1
- US 2005098494 A1
- CN 102764597 B
- JP 2012040464 A
- JP 2013173139 A

### Non-patent literature cited in the description

- **AIHUA CUI et al.** *Journal of Membrane Science,* 2010, vol. 360, 259-264
- **XIANFENG LI et al.** *Journal of Applied Polymer Science,* 2006, vol. 101, 2944-2952